# FASCICULE DE BREVET EUROPEEN

(11) **EP 0 543 706 B1**
(45) Date de publication et mention de la délivrance du brevet: **01.02.1995**
(21) Numéro de dépôt: 92403054.7
(22) Date de dépôt: 12.11.1992
(51) Int. Cl.: B60R 22/26, B60R 22/22, B60N 2/12

(54) **Dispositif d'accrochage automatique au plancher d'un véhicule d'un moyen de fixation d'une ceinture de sécurité**
Vorrichtung zum automatischen Kuppeln einer Sicherheitsgurtverankerung mit dem Boden eines Fahrzeuges
Device for automatically coupling a safety belt anchorage to a vehicle floor

(30) Priorité: 18.11.1991 FR 9114185
(43) Date de publication de la demande: 26.05.1993
(73) Titulaire: CESA COMPAGNIE EUROPEENNE DE SIEGES POUR AUTOMOBILES, 92300 Levallois-Perret (FR)
(72) Inventeur: Colin, Jacques, F-45700 Montcresson (FR); Roman, Serge, F-45120 Chalette/Loing (FR)
(74) Mandataire: Polus, Camille

(56) Documents cités:
- EP-A- 264 016
- FR-A- 2 463 024
- FR-A- 2 566 347
- US-A- 4 445 722

## Description

Le dispositif qui fait l'objet de l'invention concerne la fixation des ceintures de sécurité utilisées dans les véhicules automobiles pour assurer le maintien des utilisateurs sur leurs sièges en cas de décélération brusque ou d'accident.

Ce dispositif qui s'applique de façon générale à la fixation des ceintures de sécurité des sièges de véhicules concerne plus particulièrement les banquettes arrières comportant des places ou sièges équipés de ceintures de sécurité.

Ces ceintures de sécurité sont fréquemment fixées d'un côté du siège à la paroi du véhicule en deux points et de l'autre à un moyen de fixation proche de l'assise du siège, approximativement à la hauteur de la hanche de l'utilisateur. Pour garantir une tenue mécanique suffisante ce moyen de fixation est en général relié au plancher.

Dans le cas le plus fréquent où la banquette comporte deux emplacements formant siège, un passage est ménagé à travers l'assise pour relier le moyen de fixation de la ceinture au plancher.

Le document EP-A-457 699 déposé sous priorité du document FR-A-2662126 et publié après la date de priorité de la demande est en conséquence compris dans l'état de la technique en vertu de l'article 54(3) CBE. Ce document décrit un dispositif d'accrochage automatique au plancher d'un véhicule d'un moyen de fixation d'une ceinture de sécurité. Ce dispositif concerne plus particulièrement les banquettes arrière comportant deux emplacements formant siège.

Ce document EP concerne un moyen de fixation d'au moins une ceinture de sécurité, utilisée pour maintenir un utilisateur d'un siège de ce véhicule, moyen de fixation placé latéralement par rapport à l'utilisateur de ce siège, approximativement à la hauteur de sa hanche.

L'assise de ce siège est, de façon connue, apte à prendre, le long d'un axe longitudinal, une position fixe, choisie parmi plusieurs, par rapport au plancher du véhicule.

Le moyen de fixation est relié, de façon flexible, à une pièce majeure. Celle-ci est liée directement ou indirectement à l'assise et est de forme telle qu'elle est capable de coopérer avec un moyen de retenue, choisi parmi plusieurs moyens tels, fixés au plancher du véhicule le long d'un axe longitudinal. Un moyen de commande permet, lorsque l'assise se trouve dans une position fixe choisie parmi plusieurs parallèlement à cet axe longitudinal, d'agir directement ou indirectement sur la pièce majeure pour la libérer de sa liaison avec le moyen de retenue qui correspond à cette position fixe ou au contraire pour l'accrocher à celui-ci.

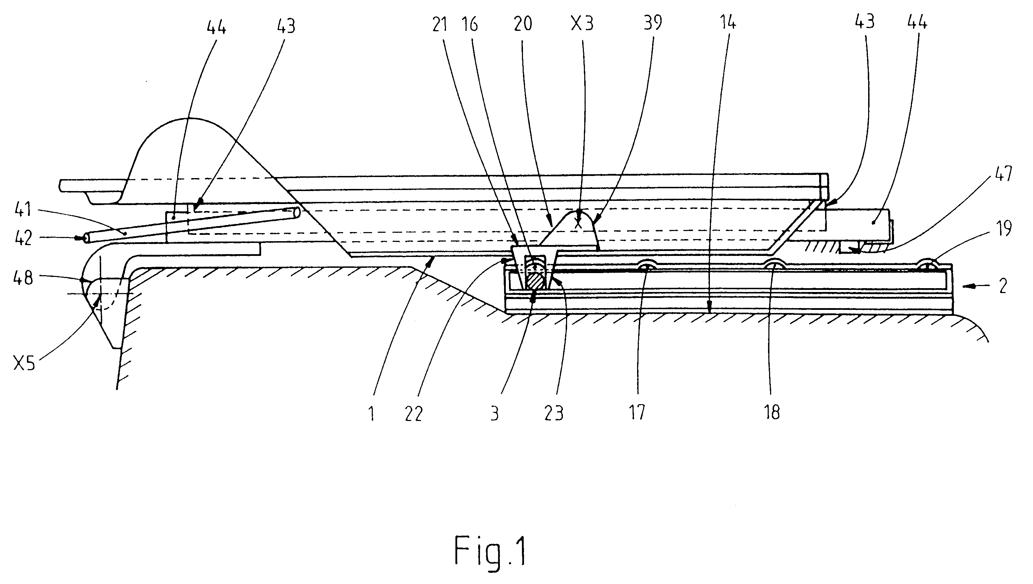

Suivant un mode de réalisation du dispositif décrit dans ce document EP, (voir figures 1 à 4 de cette demande) la pièce majeure est articulée en rotation suivant un axe transversal à une extrémité d'un bras, articulé lui-même par rapport à l'assise suivant un autre axe transversal et actionné par le moyen de commande. On fait ainsi coopérer une ouverture formant crochet dont est munie la pièce majeure avec le moyen de retenue qui a la forme d'un barreau transversal, apte à s'engager dans cette ouverture ou à se dégager de celle-ci suivant le sens de rotation de cette pièce majeure. Comme le montrent les figures 1 à 4 les moyens de retenu sont fixés sur le plancher du véhicule à la façon des barreaux d'une échelle. Par ailleurs les mêmes figures 1 à 4 de ce document EP montrent, de façon schématique que l'assise de la banquette comporte deux paires de glissières disposées de chaque côté de cette banquette. Les glissières supérieures sont solidaires de l'assise tandis que les glissières inférieures qui reposent sur le plancher du véhicule, peuvent être désolidarisées de ce plancher, grâce à des moyens connus non décrits.

Ces glissières inférieures peuvent alors permettre le basculement vers l'avant de l'assise grâce à une articulation de ces glissières inférieures, à leur extrémité avant, autour d'un axe transversal X1 fixe par rapport au plancher du véhicule.

De façon connue, lorsque les glissières inférieures sont solidarisées avec le plancher du véhicule, des moyens de réglage comportant un levier et une poignée de commande permettent de déplacer longitudinalement l'assise en faisant coulisser les glissières supérieures le long des glissières inférieures de façon connue et non représentée. Ces moyens permettent également de choisir un point fixe parmi plusieurs et d'assurer au niveau de ce point fixe le verrouillage de la position longitudinale de l'assise par rapport au plancher du véhicule. Comme cela a été dit plus haut, à chacun de ces points fixes de verrouillage de l'assise correspond un moyen de retenue, apte à coopérer avec la pièce majeure pour assurer la liaison entre le moyen de fixation de la ceinture et le plancher du véhicule.

Un deuxième mode de réalisation du dispositif est décrit dans ce document EP Ce mode de réalisation est représenté aux figures 5 à 9 . Il consiste, comme dans le cas du premier mode de réalisation, à utiliser une série de moyens de retenue fixés au plancher du vehicule comme les barreaux d'une échelle. Chacun de ces moyens de retenue correspond à une position fixe de l'assise, choisie, grâce à un moyen de réglage, entre plusieurs. Le dispositif comporte également une pièce majeure munie d'un crochet, lequel est articulé directement en rotation autour d'un axe transversal, fixe par rapport à l'assise. Un levier de commande permet de provoquer l'ouverture du crochet de façon à le libérer de sa liaison avec le moyen de retenue, un moyen de rappel élastique permettant le verrouillage ultérieure du crochet avec l'un quelconque des moyens de retenue fixés au plancher, correspondant chacun à une position fixe de réglage de l'assise.

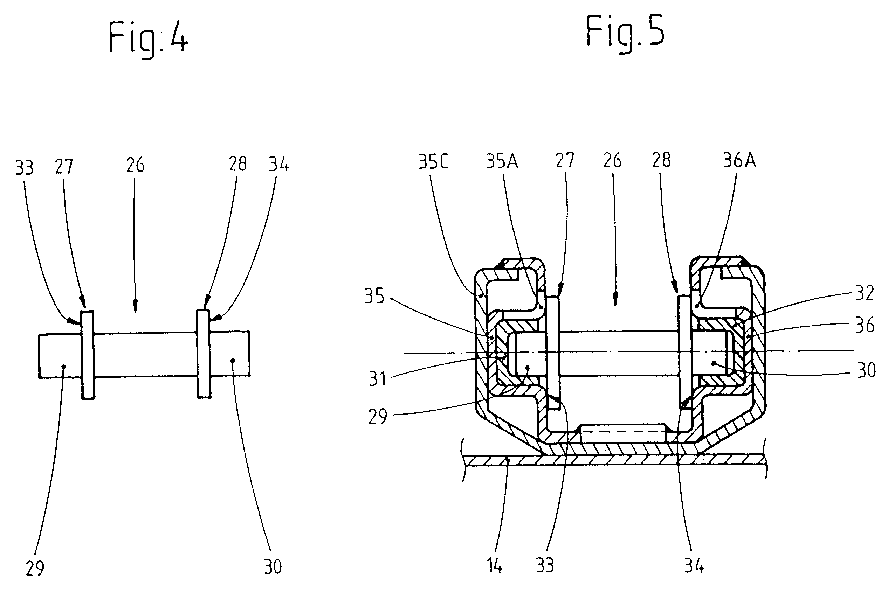

Comme le montre la figure 5 le moyen de fixation de la ceinture de sécurité est de préférence fixé à l'axe d'articulation du crochet de la pièce majeure sur l'assise.

De plus, on peut, après déverrouillage du crochet , effectuer la désolidarisation des glissières inférieures de l'assise d'avec le plancher du véhicule puis le basculement de cet assise vers l'avant autour de l'axe transversal de ces glissières inférieures. On peut, par la suite, rabattre l'assise et obtenir un auto-verrouillage du crochet par rapport au moyen de retenue.

Cet auto-verrouillage est obtenu grâce à un profil particulier donné au bord extérieur du crochet dans la zone où il entre en contact avec le moyen de retenue. On détermine ce profil de façon que la force exercée par la paroi du moyen de retenue contre le bord du crochet soit orientée de façon telle qu'elle exerce sur le crochet un couple dans le sens de l'ouverture dont le moment est suffisant pour provoquer l'ouverture du crochet, malgré le couple antagoniste exerce par le moyen de rappel élastique qui provoque, après engagement du moyen de retenue, le verrouillage.

Ce mode de réalisation convient bien pour relier deux ceintures de sécurité par l'intermédiaire de deux moyens de fixation, ou d'un moyen de fixation double à la pièce majeure et, par l'intermédiaire de celle-ci au moyen de retenue.

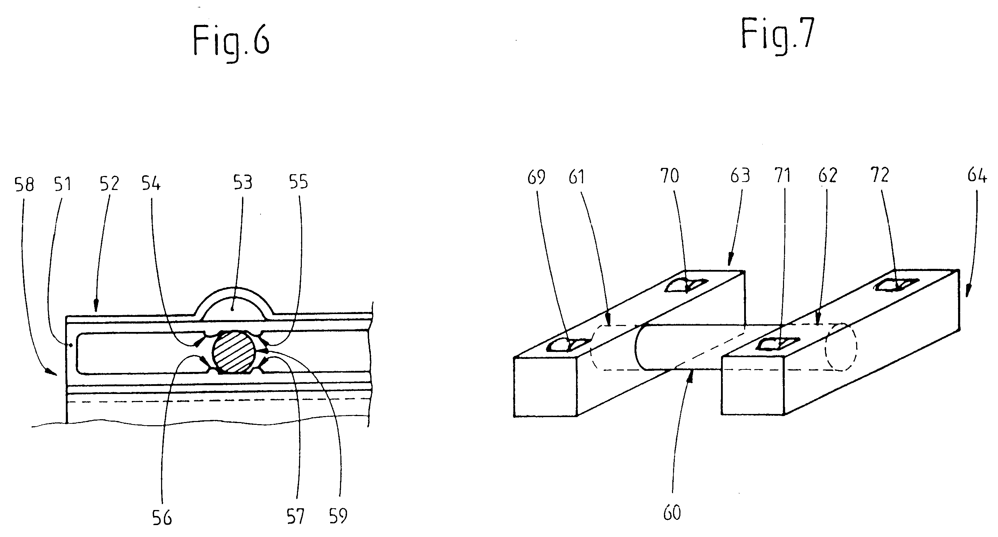

Comme cela est montré aux figures 6 à 8 du document EP le moyen d'accrochage est avantageusement dédoublé en deux crochets identiques engagés sur le même arbre d'articulation par rapport à l'assise et coopérant avec le même moyen de retenue.

Le dipositif ainsi décrit dans le document EP présente l'avantage de garantir, après liaison avec un moyen de retenue, une excellente résistance à des efforts considérables exercés par une ceinture de sécurité sur un moyen de fixation de celle-ci. Le maintien constant, de l'angle d'inclinaison par rapport à la verticale, du moyen de fixation, garantit le maintien de l'utilisateur sur son siège dans les conditions optimales de sécurité.

Ce dispositif présente par contre l'inconvénient de l'absence de liaison avec le plancher du véhicule lorsque, après déverrouillage du moyen d'accrochage par rapport à un premier moyen de retenue, ce moyen d'accrochage n'est pas encore mis en prise avec un autre moyen de retenue choisi parmi les moyens de retenue existants.

Une telle situation peut en particulier se présenter quand on veut modifier le réglage de l'assise d'une banquette en cours d'utilisation du véhicule.

De plus l'utilisation de plusieurs moyens de retenue disposés comme les barreaux d'une échelle nécessite un écart relativement important entre ces barreaux pour permettre un engagement facile du moyen d'accrochage. Pour certaines utilisations il est intéressant de pouvoir disposer de nombreuses positions fixes de verrouillage de l'assise auxquelles correspondent un même nombre de points de liaison au plancher du moyen de fixation d'une ceinture de sécurité.

On a cherché à garantir la sûreté de la liaison entre une ceinture de sécurité et le plancher d'un véhicule, même au cours d'un réglage de la position de l'assise, le long de l'axe longitudinal. On a cherché aussi la possibilité de réaliser un dispositif permettant une plage de réglage longitudinal de grande extension, comportant de nombreux points de verrouillage à chacun desquels peut correspondre une liaison efficace entre la ceinture de sécurité et le plancher du véhicule.

On a cherché enfin la possibilité de désolidariser l'assise d'avec le plancher du véhicule puis après avoir rabattu le dossier, d'effectuer le basculement vers l'avant de cette assise sans délai, soit en conservant une position quelconque de réglage soit en réglant au préalable l'assise dans sa position la plus avancée. On a cherché de même à pouvoir, de façon quasi immédiate, rabattre l'assise dans sa position initiale, en obtenant un verrouillage immédiat de la ceinture de sécurité avec le plancher du véhicule par l'intermédiaire de son moyen de fixation.

Une autre solution est exposée dans le document EP-A-0 264 016. Toutefois cette solution n'est pas prévue pour un siège dont notamment l'assise est basculable en particulier vers l'avant. Tous les éléments de cette solution qui sont divulgués et qui sont nécessaires à l'invention, sont mentionnés dans le préambule de la revendication principale.

Le dispositif qui fait l'objet de l'invention se trouve dans la revendication principale, et permet d'atteindre ces résultats. Il permet de relier au plancher d'un véhicule automobile au moins un moyen de fixation d'une ceinture de sécurité utilisée pour maintenir un utilisateur d'un siège de ce véhicule.

La zone de jonction de ce moyen de fixation avec la ceinture de sécurité est située latéralement par rapport à l'utilisateur de ce siège dont l'assise est apte à prendre, le long d'un axe longitudinal une position fixe, choisie parmi plusieurs, par rapport au plancher du véhicule. Comme on le verra ci-après le dispositif suivant l'invention est particulièrement apte à assurer la liaison au plancher des deux ceintures de sécurité qui assurent le maintien des utilisateurs de deux emplacements formant sièges d'une banquette arrière, liaison au plancher qui doit être réalisée sensiblement au milieu de la banquette dont l'assise n'est le plus souvent reliée au sol qu'à chacune de ses extrémités par une paire de glissières.

Suivant l'invention , la liaison au plancher d'au moins une ceinture de sécurité est réalisée en faisant appel à un moyen de retenue monté coulissant dans une glissière solidaire du plancher du véhicule et sensiblement parallèle à l'axe longitudinal de celui-ci. Cette glissière comporte des bords de retenue aptes à coopérer avec le moyen de retenue. Celui-ci est apte à venir en prise avec un moyen d'accrochage relié, de façon directe ou indirecte à au moins un aryen de fixation d'au moins une ceinture de sécurité. Un moyen de liaison en translation, fixe par rapport à l'assise sur laquelle se trouve l'emplacement d'au moins un siège équipé d'une ceinture de sécurité permet de maintenir de façon précise la position longitudinale relative du moyen de retenue par rapport à cette assise, lorsque celle-ci est déplacée par rapport au plancher du véhicule suivant cet axe longitudinal.

De préférence le moyen d'accrochage qui relie le moyen de fixation de la ceinture de sécurité au moyen de retenue comporte une liaison articulée avec l'assise.

Dans le cas le plus fréquent où l'assise est celle d'une banquette arrière comportant deux emplacements formant siège équipés chacun d'une ceinture de sécurité, la liaison au plancher du ou des moyens de fixation reliés à ces ceintures est effectuée à travers un passage réalisé à travers l'assise, sensiblement à mi-distance des extrémités.

Suivant un mode de réalisation préférentiel, le moyen de liaison en translation est une fourchette à deux dents orientées vers le bas qui coopèrent avec le moyen de retenue en l'encadrant avec un faible jeu suivant l'axe longitudinal du véhicule lorsque l'assise est en position d'utilisation.

De préférence également, le moyen de retenue est un barreau transversal dont les deux extrémités sont chacune engagées coulissantes dans un profilé à section en U, couché sur le côté, et allongé parallèlement à l'axe longitudinal du véhicule, le moyen de liaison en translation coopérant avec le barreau transversal dans la zone située entre les deux profilés. De façon avantageuse, les deux profilés en U sont solidarisés entre eux et avec le plancher du véhicule par un profilé d'assemblage qui assure cette liaison avec le plancher.

De préférence, le côté de chacun des deux profilés en U qui constitue le bord supérieur de retenue de ce profilé comporte des moyens d'arrêt aptes à empêcher l'extrémité correspondante du moyen de retenue de coulisser le long de la glissière lorsqu'elle est soumise à une force de traction exercée par la ou les ceinture(s) de sécurité qui dépasse un seuil déterminé fixé au-delà des conditions normales d'utilisation du véhicule. Chacun de ces moyens d'arrêt correspond à une position fixe que l'assise est apte à prendre dans son domaine de réglage, suivant l'axe longitudinal.

De façon avantageuse, ces moyens d'arrêt sont réalisés dans le bord supérieur de retenue de chaque profilé en U , sous forme d'un logement ou d'une encoche au niveau de chaque position fixe que peut prendre le moyen de retenue dans le domaine de réglage longitudinal de l'assise. De préférence, ces moyens d'arrêt sont disposés de façon que le moyen de retenue puisse s'y engager par un déplacement de bas en haut, mais seulement lorsque la force de traction exercée par la ou les ceinture(s) de sécurité et transmise par le ou les moyen(s) de fixation et le moyen d'accrochage dépasse un seuil du même ordre de grandeur que celui indiqué plus haut.

Suivant un mode de réalisation avantageux, le moyen de retenue est un barreau transversal, métallique de préférence dont les deux extrémités sont chacune solidaire d'un patin, allongé parallèlement à l'axe longitudinal qui est monté coulissant dans le profilé en U correspondant. La tenue mécanique de la liaison entre les extrémités du barreau transversal et les patins est déterminée de façon qu'au-delà du seuil indiqué plus haut la force de traction exercée par la ceinture et transmise au barreau par le moyen d'accrochage provoque l'arrachement des extrémités du barreau vis-à-vis des patins et leur engagement dans les logements ou encoches avec blocage de toute translation ultérieure du barreau le long de la glissière.

Afin d'éviter que les patins ne se déplacent dans la glissière lorsque, après basculement de l'assise vers l'avant, le moyen de liaison en translation ne maintient plus le moyen de retenue en position longitudinale fixe par rapport à l'assise, on munit avantageusement les patins de protubérances élastiques qui assurent un freinage du barreau dans la glissière. Suivant un mode de réalisation avantageux du moyen de liaison en translation celui-ci comporte deux fourchettes qui laissent entre elles un intervalle permettant la mise en prise sur le barreau transversal d'au moins un moyen d'accrochage.

L'utilisation de ces deux fourchettes permet le coulissement du moyen de retenue dans la glissière parallèlement à lui-même.

Avantageusement, le moyen d'accrochage est dédoublé en deux crochets côte à côte identiques et de même axe par rapport à l'assise, à déplacement simultané.

Avantageusement également, le moyen de retenue est un barreau de révolution qui comporte deux rebords annulaires de guidage, de diamètre au moins égal à la distance entre les parois extérieurs des bords de chaque profilé en U dans lequel est engagée l'extrémité correspondante du barreau transversal. La distance entre ces rebords est ajustée de façon telle que leurs surfaces latérales, sensiblement planes, en regard des deux bords des deux profilée en U, coulissent avec un jeu le long de ces bords au cours du déplacement en translation de ce moyen de retenue.

Suivant un mode particulier de réalisation, le moyen de retenue est un barreau de révolution muni ou non de rebords annulaires de guidage qui est engagé par chacune de ses extrémités dans des profilés en U, en matière plastique, eux-mêmes logés dans les profilés métalliques en U qui constituent les composants de base de la glissière suivant l'invention. Ces profilés métalliques comportent un bord supérieur de retenue muni de moyens d'arrêt sous forme de logements ou d'encoches. Le bord correspondant du profilé en U en matière plastique ne comporte pas de moyens d'arrêt mais sa résistance mécanique est déterminée pour que l'extrémité du barreau de révolution le déforme et vienne se bloquer dans le moyen lorsque la force de traction exercée par la ceinture de sécurité dépasse le seuil déterminé.

De plus, de préférence, au moins l'un des bords de chaque profité en U en matière plastique comporte des protubérances dirigées vers l'intérieur disposées de part et d'autre de chaque emplacement correspondant à une position fixe de réglage qui peut être choisie pour le moyen de retenue solidaire de l'assise, emplacement au niveau duquel le bord supérieur de retenue de chaque profilé métallique en U est muni d'un moyen d'arrêt. Les dimensions et l'élasticité de ces protubéranes sont déterminées pour assurer le maintien du barreau transversal au niveau du point fixe où il a été amené par le moyen de liaison en translation, même après basculement de l'assise vers l'avant. Les caractéristiques de ces protubérances sont également déterminées pour permettre le coulissement commandé du moyen de retenue le long de la glissière sous l'action du moyen de liaison en translation.

De préférence, le moyen de fixation de la ceinture de sécurité est relié, de façon articulée autour d'un axe transversal au moyen d'accrochage. Ce moyen de fixation peut être double et assurer ainsi la fixation des extrémités de deux ceintures de sécurité correspondant à deux emplacements côte à côte d'utilisateurs d'une même banquette arrière. Comme précisé plus haut, une ouverture ménagée à travers l'assise permet alors le passage des moyens assurant la liaison entre les ceintures de sécurité et le moyen de retenue au plancher du véhicule.

Suivant un mode particulier de réalisation, le moyen d'accrochage comporte deux liaisons articulées, l'une avec l'assise et l'autre avec le moyen de fixation, autour d'axes transversaux distincts disposés de façon telle qu'une force de traction, exercée sur le moyen de fixation par la ceinture de sécurité, applique un couple de verrouillage sur le moyen d'accrochage vis-à-vis du moyen de retenue. Avantageusement, un moyen de rappel élastique est disposé de façon à exercer sur le moyen d'accrochage un couple antagoniste de déverrouillage.

Suivant un autre mode de réalisation, les deux liaisons articulées du moyen d'accrochage avec l'assise et avec le moyen de fixation de la ceinture sont disposées suivant un même axe.

De façon avantageuse, le bord extérieur du moyen d'accrochage, dans la zone où il entre en contact avec la paroi du moyen de retenue, lorsqu'on rabat l'assise à l'horizontale après l'avoir basculée vers l'avant a un profil tel que la force appliquée par la paroi de ce moyen de retenue sur ce bord extérieur exerce sur ce moyen d'accrochage un couple dans le sens de l'ouverture. Il est dans ce cas avantageux de munir le moyen d'accrochage d'un moyen de rappel élastique disposé de façon à exercer un couple de rappel antagoniste garantissant ainsi un reverrouillage entièrement automatique du moyen d'accrochage lors du rabattement de l'assise sur le plancher du véhicule.

Les exemples et les figures ci-après décrivent, de façon non limitative des modes particuliers de réalisation du dispostif suivant l'invention.

La figure 1 est une vue schématique latérale en élévation et en coupe de l'assise d'une banquette munie du dispositif suivant l'invention.

La figure 2 est une vue schématique en coupe transversale d'une glissière pour moyen de retenue au plancher d'un véhicule de moyen de fixation d'une ceinture de sécurité s'rivant l'invention.

La figure 3 est une vue latérale d'un moyen d'accrochage au plancher suivant l'invention.

La figure 4 est une vue d'un moyen de retenue comportant des rebords de guidage suivant l'invention.

La figure 5 est une vue en coupe transversale d'une variante de réalisation d'une glissière suivant l'invention.

La figure 6 est une vue d'un détail de réalisation d'une glissière suivant l'invention.

La figure 7 est une vue d'un moyen de retenue suivant l'invention équipé de patins.

La figure 8 est une vue latérale du moyen de retenue de la figure 7 engagé dans une glissière suivant l'invention.

La figure 9 est une vue latérale d'un mode particulier de réalisation d'une glissière suivant l'invention.

La figure 10 est une vue d'une variante de réalisation du moyen d'accrochage de la figure 3.

La figure 11 est une vue du moyen d'accrochage de la figure 10 au moment de son accrochage par autoverrouillage suivant l'invention.

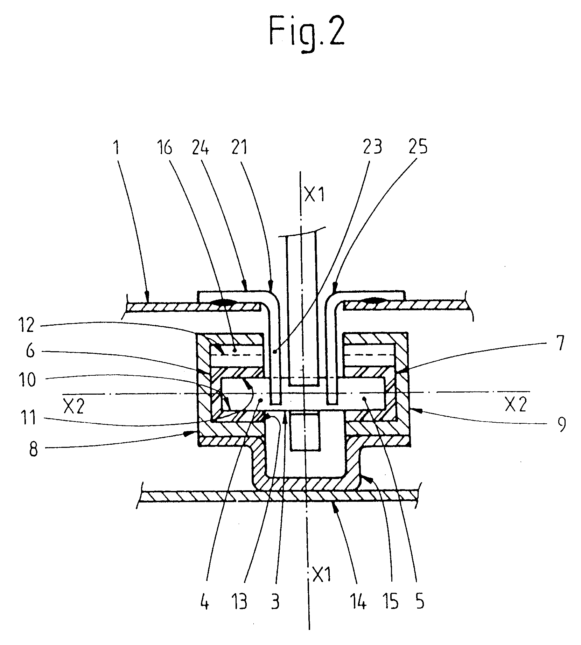

La figure 1 est une vue schématique en élévation et en coupe de l'assise 1 d'une banquette arrière suivant un plan vertical parallèle à l'axe longitudinal d'un véhicule. Ce plan vertical coupe à angle droit, suivant la droite en points-tirets X1-X1 le plan de la figure 2 qui représente en coupe une glissière 2 dans laquelle est engagé un moyen de retenue sous forme d'un barreau de révolution 3 d'axe X2-X2. L'axe de la glissière 2 parallèle à l'axe longitudinal du véhicule est perpendiculaire au plan de la figure 2. Les deux extrémités 4, 5 du barreau tranversal 3 sont engagées chacune dans un profilé en U en matière plastique 6, 7 inséré lui-même dans un profilé en U métallique 8, 9. Les bords de retenue tels que 10, 11 et 12, 13 correspondent respectivement au profilé en plastique 6 et au profilé métallique 8 maintiennent le moyen de retenue 3 dans la glissière 2 qui est elle même solidarisée avec le plancher 14 du véhicule par le profilé 15 relié par exemple par soudage, d'une part avec les profilés métalliques en U 8, 9 et d'autre part avec le plancher 14. Comme le montrent les figures 1, 2 et 3 le moyen de retenue 3 se trouve dans une position fixe de réglage de l'assise 1 suivant l'axe longitudinal. Le bord de retenue supérieur 11 du profil en U en matière plastique 6 a un profil constant parallèlement à l'axe longitudinal tandis que le bord de retenue supérieur 12 du profilé en U métallique comporte des moyens d'arrêt au droit de chaque position fixe de réglage de l'assise 1. Ces moyens d'arrêt sont des logements 16, 17, 18, 19 réalisés par formage du bord de retenue 12. Un moyen de liaison en translation 20 est fixé à l'assise 1. Il comprend une pièce 21 formant fourchette à deux dents 22, 23 dont l'intervalle entre dents est ouvert vers le bas. La largeur de cet intervalle est telle que le moyen de retenue 3 puisse être logé entre ces dents avec un jeu suffisant. La longueur des dents est déterminée de façon qu'elles encadrent le moyen de retenue et assurent son déplacement simultané avec celui de l'assise 1 lors du réglage de celle-ci. Comme le montre la figure 2 le moyen de liaison en translation 20 est solidarisé avec l'assise 1 par une patte de fixation 24 liée, par exemple, par soudage. Avantageusement, comme le montre la figure 2 un deuxième moyen de liaison en translation 25 est disposé symétriquement par rapport au plan qui intersecte la figure suivant X1-X1. Ce moyen de liaison en translation 25 est solidarisé de la même façon que le premier 20 par une patte fixée à un bord du passage ménagé à travers l'assise 1. Une telle disposition assure le déplacement du moyen de retenue dans la glissière parallèlement à lui-même.

Un autre moyen permet d'assurer le déplacement du moyen de retenue le long de la glissière parallèlement à lui-même. Comme le montre la figure 4 on munit pour cela un moyen de retenue, sous forme d'un barreau de révolution 26 de deux rebords de guidage 27, 28, laissant chacun dépassé vers l'extérieur la zone d'extrémité correspondante 29, 30 apte à s'engager dans un profilé en U en matière plastique 31, 32 d'une glissière telle que 33 représentée figure 5. Ces deux rebords de guidage 27, 28 ont chacun une paroi latérale extérieure 33, 34 en regard du ou des profilé(s) en U correspondant(s) sensiblement plane, la distance entre ces deux parois latérales, extérieures 33, 34 étant sensiblement égale à la distance entre les bords frontaux des profilés en U en regard, tels que 31, 32, 35, 36 dans le cas de la figure 5, en laissant cependant un jeu suffisant. On évite ainsi les risques de mise en biais d'un moyen de retenue tel que par exemple le barreau de révolution 3.

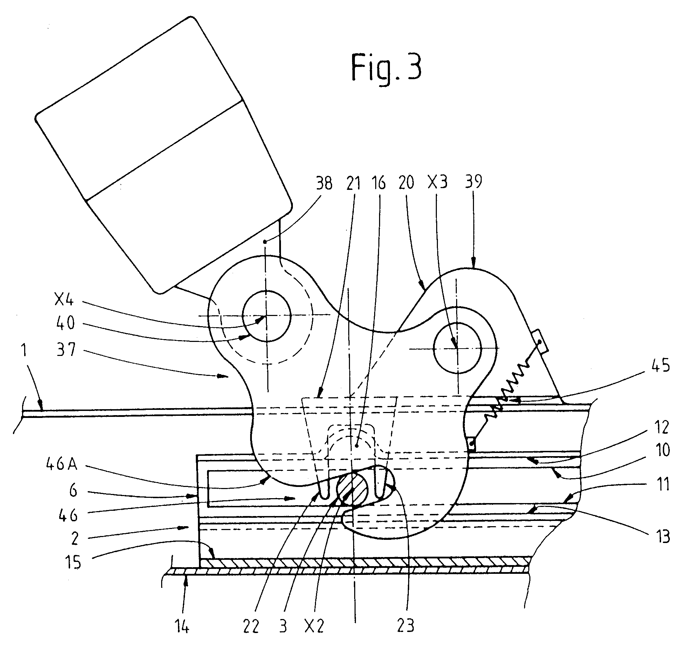

La figure 3 qui représente de façon agrandie le moyen de liaison en translation 20 de la figure 1, montre également un premier mode de réalisation du moyen d'accrochage 37 qui assure, par l'intermédiaire du moyen de retenue 3, la liaison au plancher 14 du véhicule du moyen de fixation 38 lui-même rattaché à la ceinture de sécurité non représentée. La figure 1, sur laquelle le moyen d'accrochage 37 n'a pas été représenté pour faciliter la compréhension de ce mode de réalisation de l'invention, montre que le moyen de liaison en translation 20 solidaire de l'assise 1 comporte un prolongement 39 sur lequel le moyen d'accrochage 37 est articulé en rotation autour d'un axe transversal X3. Ce moyen d'accrochage comporte une zone d'entrée 46 apte à coopérer avec le moyen de retenue 3 lorsque celui-ci se trouve logé entre les deux dents 22, 23 de la fourchette 21. La liaison entre le moyen de fixation 38 de la ceinture de sécurité et le moyen d'accrochage 37 est effectuée de façon directe grâce à une liaison articulée en 40 d'axe X4. On voit qu'une force de traction exercée par la ceinture de sécurité suivant un angle X pas supérieur à environ 45° permet d'exercer sur le moyen d'accrochage 37 un couple dans le sens des aiguilles d'une montre autour de l'axe X3 dans le sens du verrouillage.

Comme le montre la figure 1 le moyen de réglage de l'assise 1 par l'intermédiaire du levier 41 actionné par la poignée 42 permet de faire coulisser les glissières supérieures, telles que 43, solidaires de l'assise, par rapport aux glissières inférieures, telles que 44, solidaires du plancher du véhicule. Dans le cas de la présente figure 1 la paire de glissières 43-44 se trouve à l'extrémité droite de la banquette arrière de l'assise 1 et la deuxième paire de glissières non représentée est à l'extrémité gauche. Comme le montre la figure 1, l'assise peut prendre, sous l'action du levier 41 une position fixe parmi quatre positions possibles auxquelles correspondent les quatre moyens d'arrêt 16, 17, 18, 19 dont sont munis les deux bords de retenue supérieurs tels que 12 des profilés métalliques 8 et 9. L'utilisation de profilés intérieurs en matière plastique à section en U tels que 6, 7 permet de faire coulisser sans à-coups le moyen de retenue 3. Lorsque l'effort de traction exercé par la ceinture de sécurité sur le moyen de fixation 38 et transmis au moyen de retenue 3, dépasse un certain seuil, le bord supérieur de retenue en plastique 12 se déforme et les extrémités du barreau 3 pénètrent dans les logements tels que 16 qui assurent ainsi un maintien du barreau 3 dans le sens longitudinal, même en cas de forces de traction pouvant atteindre plusieurs tonnes exercées sur un barreau d'environ 10 à 15 mm de diamètre logé dans une glissière calculée en proportion. On remarque que le réglage longitudinal de la position de l'assise s'effectue sans dégager le moyen de retenue de sa position de maintien entre les dents de la fourchette du moyen de liaison en translation. De même, il n'y a pas lieu d'ouvrir le moyen d'accrochage. On voit que ce moyen d'accrochage 37 est équipé d'un moyen élastique de déverrouillage 45 mais la configuration du bord supérieur 46 A de la zone d'entrée 46 empêche, comme le montre la figure 3, tout déverrouillage tant que les glissières inférieures telles que 44 de l'assise 1 restent reliées au plancher 14 par un moyen de solidarisation tel que 47, ou encore restent simplement en appui sur ce plancher 14. Ces glissières inférieures telles que 44 sont reliées à leur extrémité avant au plancher 14 du véhicule par une articulation 48 d'axe transversal X5 qui permet, après si nécessaire, désolidarisation de l'arrière de ces glissières telles que 44 d'avec le plancher 14, le basculement vers l'avant de l'assise 1. Pour cela des moyens de commande connus et non représentés permettent de replier sur la banquette le dossier de celle-ci, puis, après éventuellement commande, par un moyen connu, de la désolidarisation des glissières inférieures telles que 44 d'avec le plancher 14 au niveau des moyens de solidarisation tels que 47, on peut basculer l'assise 1 vers l'avant. On remarque que la force exercée par le moyen élastique 45 favorise la rotation du moyen d'accrochage 37 dans le sens de l'ouverture c'est à dire le sens inverse des aiguilles d'une montre. Le moyen élastique 45 maintient ensuite le moyen d'accrochage 37 en position d'ouverture. On remarque que le simple rabattement de l'assise au plancher 14 du véhicule, par rotation autour de l'axe X5, permet le reverrouillage automatique du moyen d'accrochage vis-à-vis du moyen de retenue 3 par mise en appui du bord supérieur 46A de la zone d'entrée 46 contre ce moyen de retenue. Cette mise en appui crée en couple autour de l'axe X3 dans le sens des aiguilles d'une montre qui provoque le verrouillage du moyen d'accrochage vis-à-vis du moyen de retenue.

On constate cependant, si les bords de retenue des profilés en plastique 6, 7 n'exercent pas sur les extrémités du barreau 3 un certain serrage, que ce barreau peut coulisser le long de la glissière 2 lorsque l'assise est basculée vers l'avant, le moyen de liaison en translation n'étant plus en prise avec le moyen de retenue. Dans ce cas, lorsqu'on rabat l'assise sur le plancher du véhicule, il n'y a plus de liaison entre le moyen de retenue 3 et le moyen de liaison en translation 20.

Plusieurs moyens permettent de résoudre cette difficulté.

Comme le montre la figure 6, tout en utilisant comme composants de glissières des profilés en U en matière plastique tels que 51 logés dans des profilés en U métalliques tels que 52 comportant des moyens d'arrêt sous forme de logements tels que 53 pour recevoir les extrémités d'un moyen de retenue tel qu'un barreau métallique transversal de révolution du type du barreau 3 des figures 1, 2, et 3 ou 26 de la figure 4, on peut munir ces profilés en U tels que 51 de protubérances telles que 54, 55, 56, 57. Comme le montre la figure 6, ces protubérances sont placées avantageusement par groupes de deux encadrant chacun des moyens d'arrêt tels que 53 de la glissière 58 dont seule une portion est représentée. Chacun de ces points d'arrêt correspond à une position fixe de réglage longitudinal de l'assise comme dans le cas des figures 1, 2, ou 3. De même les logements tels que 53 sont aptes à recevoir les extrémités telles que 59 du moyen de retenue, lorsque l'effort de traction, exercée par la ceinture de sécurité, dépasse un seuil déterminé au-delà duquel le bord supérieur du profilé en U en matière plastique cède et se déforme en laissant pénétrer les extrémités telles que 59 dans les logements tels que 53.

Les protubérances telles que 54, 55 et 56, 57 maintiennent les extrémités telles que 59 du moyen de retenue en position longitudinale fixe dans la glissière 58 lorsque l'assise est basculée vers l'avant. Lorsque l'assise est rabattue le moyen de liaison en translation peut venir à nouveau encadrer le moyen de retenue. On détermine les dimensions et l'élasticité des protubérances de façon que celles-ci n'opposent pas une trop grande résistance au déplacement du moyen de retenue par action du moyen de liaison en translation quand on effectue le réglage longitudinal de l'assise.

Suivant une autre façon de résoudre la même difficulté on peut, comme le montrent les figures 6 et 7 utiliser comme moyen de retenue un barreau métallique 60 solidarisé à chacune de ses extrémités 61, 62 avec un patin en matière plastique 63, 64 allongé parallèlement à l'axe longitudinal de la glissière 65 dont les dimensions sont déterminées pour qu'il coulisse avec un faible jeu dans le profilé en U métallique tel que 66 correspondant.

Ces patins assurant un guidage régulier du moyen de retenue 60 à chaque réglage longitudinal de l'assise ; ils empêchent en particulier les extrémités 61, 62 de s'engager dans les logements tels que 67 formés dans le bord de retenue supérieur 68 du profilé en U métallique 66.

La tenue mécanique de la liaison entre les extrémités 61, 62 du barreau transversal 60 et les patins 63, 64 est déterminée de façon qu'au-delà d'un seuil déterminé la force de traction exercée par la ceinture de sécurité arrache les extrémités telles que 61 des patins tels que 63 et les engage dans des moyens d'arrêt tels que le logement 67 formés dans les bords de retenue supérieurs tels que 68 du profilé en U métallique 66. On obtient alors un blocage du moyen de retenue 60 particulièrement efficace.

Afin d'éviter tout coulissement accidentel des patins 63, 64 dans les profilés en U métalliques tels que 66, lorsque l'assise est basculée vers l'avant, on munit avantageusement chaque patin d'au moins une paire de protubérances 69, 70, 71, 72 aptes à venir en appui coulissant contre l'un au moins des deux bords de retenue des profilés en U métalliques tels que 66. Les dimensions et caractéristiques de ces protubérances sont déterminées pour qu'elles n'opposent pas une très grande résistance au déplacement sous l'action du moyen de liaison en translation quand on règle la position longitudinale de l'assise. De même on ajuste cette résistance de façon que le moyen de retenue ne se déplace pas seul dans la glissière 65 quand l'assise est en position basculée vers l'avant.

Afin d'éviter les risques de glissement accidentel des patins dans les profilés en U métalliques tels que 66 on peut munir, au moins l'un des bords de retenue tels que 68, de logements auxiliaires tels que 73, 74 aptes à recevoir les protubérances telles que 69, 70. Ces logements encadrent de façon symétrique chaque moyen d'arrêt tel que 67 et assurent donc un maintien précis du moyen de retenue 60 dans son emplacement lorsque l'assise est basculée vers l'avant. Les protubérances 69, 70, 71, 72 peuvent être soit réalisées dans la même matière plastique que les patins 63, 64 soit réalisées en des matières différentes, plastiques ou métalliques aptes à présenter des caractéristiques mécaniques optimales.

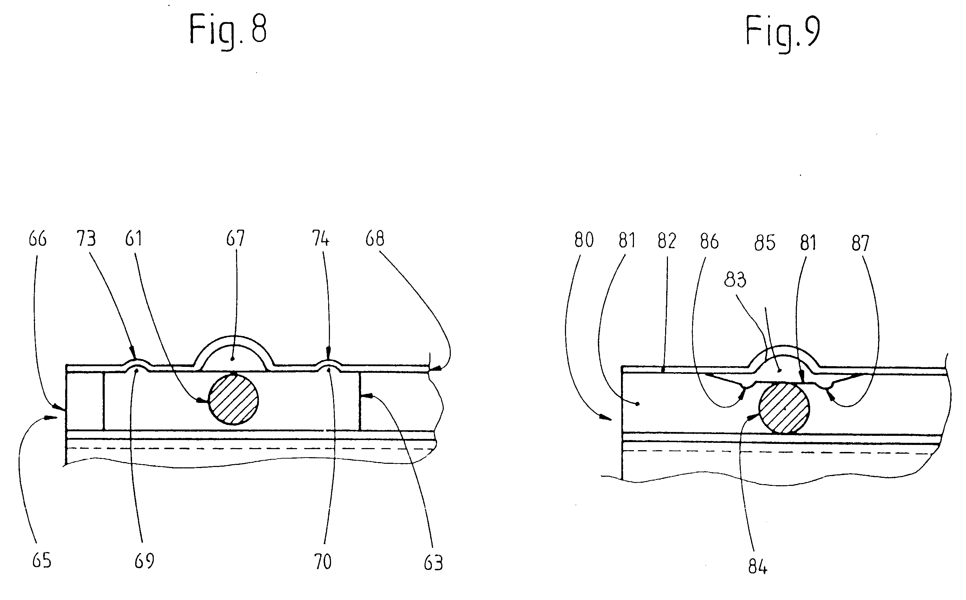

On peut également contrôler le coulissement du moyen de retenue dans des profilés en U métalliques munis de moyens d'arrêt sans faire appel à des patins ou en utilisant des lames élastiques munies de protubérances à la hauteur de chaque moyen d'arrêt comme le montre la figure 9. Dans le cas de cette figure 9 la glissière 80 comporte deux profilés en U métalliques tels que 81 comportant des bords supérieurs de retenue tels que 82 munis de moyens d'arrêt tels que le logement 83.

Pour éviter que les extrémités telles que 84 d'un moyen de retenue de révolution ne s'engagent dans les logements tels que 83, en l'absence d'effort de traction supérieur à un seuil déterminé, une lame métallique 85 de grande élasticité obture chaque logement tel que 83 et permet donc au moyen de retenue de coulisser sans être arrêté. En même temps les lames telles que 85 comportent des bossages tels que 86, 87 qui encadrent le logement 83 et permettent de maintenir les extrémités telles que 84 dans la position fixe de réglage de l'assise à laquelle le moyen de retenue a été amené par le moyen de liaison en translation. Ainsi si l'assise est basculée vers l'avant les bossages 86, 87 jouent le même rôle que les protubérances 54, 55 de la figure 6. De même si l'effort de traction exercé sur le moyen de retenue par la ceinture de sécurité dépasse un seuil déterminé les lames telles que 85 se déforment élastiquement vers l'intérieur des logements tels que 83 et permettent aux extrémités telles que 84 du moyen de retenue de venir s'engager dans ces logements tels que 83 qui assurent leur blocage. Les lames élastiques sont avantageusement fixées au bord supérieur du moyen de retenue par des moyens connus d'agrafage permettant un léger glissement longitudinal pour accompagner la pénétration dans le logement 83. Avantageusement, les moyens de retenue utilisés pour coopérer avec des glissières telles que la glissière 80 sont munis de rebords de guidage tels que les rebords 27, 28 représentés aux figures 4 et 5.

Avantageusement également, les profilés en U métalliques, tels que le profilé 81 de la figure 9 ou encore les autres profilés en U métalliques représentés aux autres figures, peuvent comporter comme moyens d'arrêt, au lieu de logements arrondis réalisés par déformation du bord de retenue, des encoches réalisées par des découpes localisées effectuées dans ces bords de retenue. La figure 5 décrite plus haut montre des profilés en U métalliques 35, 36 utilises en association avec des profilés en U en matière plastique 31, 32 qui comportent comme moyens d'arrêt des encoches 35A et 36A. On voit que les replis supérieurs 35B, 36B qui assurent la liaison avec la structure d'ensemble de la glissière de la figure 5 par soudage avec un profilé d'assemblage 35C relié au plancher 14, permettent de déterminer la hauteur de ces encoches susceptibles de recevoir les extrémités 29, 30 du moyen de retenue 26.

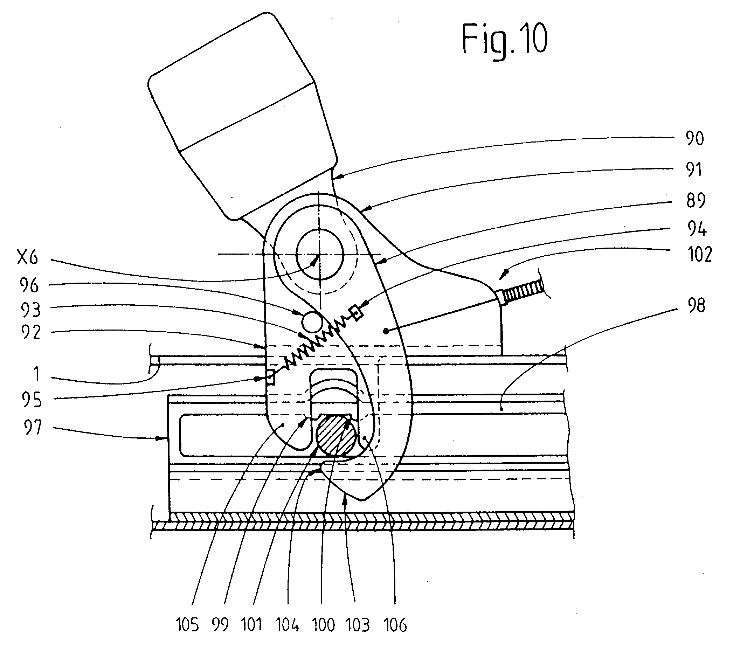

Le moyen d'accrochage 89 peut, comme le montre la figure 10, comporter un seul axe d'articulation X6 auquel est relié le moyen de fixation 90 de la ceinture de sécurité non représentée.

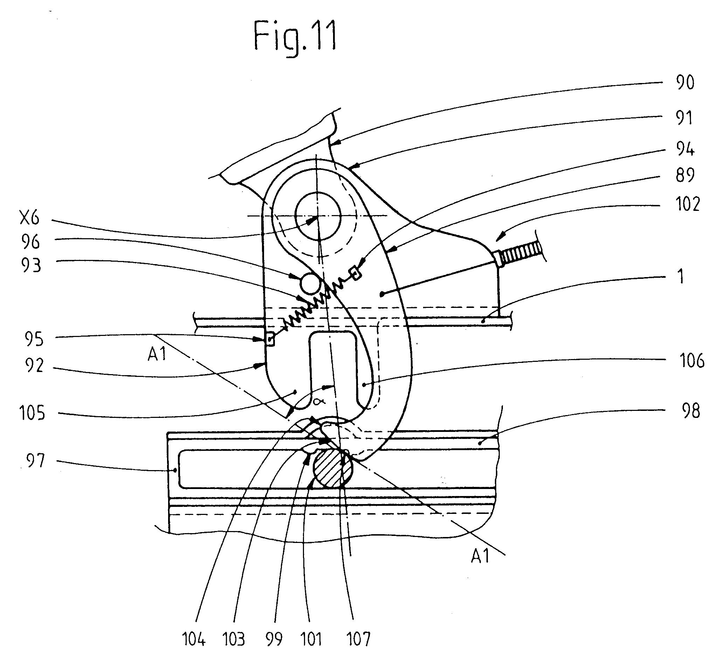

Le moyen d'accrochage 89 est articulé autour du même axe X6 sur un prolongement 91 du moyen de liaison en translation 92. Le moyen de fixation 90 n'exerçant pas de couple de verrouillage, un moyen élastique de verrouillage 93 comportant un ressort est tendu entre un point 94 du moyen d'accrochage et un point 95 du moyen de liaison en translation 92. Une butée 96 limite la rotation du moyen d'accrochage pour qu'il ne dépasse pas la position d'accrochage quand il est éloigné du moyen de retenue. Dans le cas de la figure 10 le moyen de retenue coulisse dans un profilé en U en matière plastique 97 qui comporte sur son bord supérieur de retenue 98 des protubérances 99, 100 aptes à coopérer avec l'extrémité d'un moyen de retenue 101 de révolution. Ainsi si on effectue le basculement, le moyen de retenue ne peut coulisser seul le long de ce profilé 97. Un moyen de déverrouillage 102 muni d'un cable de commande qui peut être actionné depuis l'arrière de la banquette permet d'ouvrir le moyen d'accrochage 89 et donc de basculer l'assise 1 vers l'avant. La figure 11 montre que le moyen d'accrochage 89 comporte un moyen d'auto-verrouillage qui permet son accrochage automatique au moyen de retenue. Comme le montrent les deux figures 10 et 11 le moyen d'accrochage 89 comporte un bord inférieur 103 situé au-dessous du bec d'accrochage 104 dont le profil est étudié pour coopérer avec le bord supérieur du moyen de retenue 101. La pente de ce bord inférieur est déterminée de façon que la force exercée au point de contact lorsqu'on rabat l'assise à l'horizontale crée un couple antagoniste vis-à-vis du moyen élastique de verrouillage 93, qui provoque l'ouverture du moyen d'accrochage. Pour obtenir ce résultat la tangente A1 à chacun des points de contact successifs tels que 107 entre le moyen de retenue 101 et le bord inférieur 103 du moyen d'accrochage 89 doit faire un angle vis-à-vis de la droite qui joint les points X6 et 107 incliné de moins de 90; mesuré dans le sens trigonométrique à partir de X6. Dès que l'assise est revenue dans sa position initiale le moyen élastique 93 referme le moyen d'accrochage sur le moyen de retenue et les dents 105, 106 du moyen de liaison en translation 92 encadrent à nouveau le moyen de retenue 101.

Un grand nombre de variantes ou modifications du dispositif suivant l'invention peuvent être réalisés qui ne sortent pas du domaine de celle-ci, comme défini dans les revendications suivantes.

## Revendications

1. Dispositif qui permet de relier au plancher (14) d'un véhicule automobile un moyen de fixation (38, 90) d'au moins une ceinture de sécurité utilisée pour maintenir l'utilisateur d'un siège de ce véhicule, où ce moyen de fixation (38, 90) est situé latéralement par rapport à l'utilisateur de ce siège et où l'assise (1) de ce siège est apte à prendre, le long d'un axe longitudinal, une position fixe choisie parmi plusieurs par rapport au plancher (14) du véhicule et qui comprend
- une glissière (2) qui est solidaire du plancher (14) du véhicule, qui est sensiblement parallèle à l'axe longitudinal de celui-ci et qui est munie de bords de retenue (12, 68, 82),
- un moyen de retenue (3, 26, 61, 84) qui est monté coulissant dans la glissière (2) et qui est apte à coopérer avec les bords de retenue (12, 68, 82) de celle-ci (2) ;
- un moyen de liaison en translation (20) qui est fixe par rapport à l'assise (1) et qui permet de maintenir de façon précise la position longitudinale relative du moyen de retenue (3, 26, 61, 84) par rapport à l'assise (1) lorsque cette dernière est déplacée en translation, et qui est caractérisé en outre. en ce qu'il comprend.
- un moyen d'accrochage (37, 89) qui est relié de façon directe ou indirecte au moyen de fixation (38, 90) de la ceinture de sécurité et qui vient en prise avec le moyen de retenue (3, 26, 61, 84),
- en ce que le moyen de fixation (38, 90) est fixe par rapport à l'assise du siège,
- en ce que l'assise (1) du siège peut basculer vers l'avant,
- et en ce que le moyen d'accrochage (37, 89) ainsi que le moyen de liaison (20) qui sont tous deux normalement reliés au moyen de retenue (3, 25, 61, 84) sont aptes à s'en séparer lorsqu'on bascule l'assise (1) du siège.

2. Dispositif suivant la revendication 1, caractérisé en ce que le moyen d'accrochage (37, 89) comporte une liaison (X3, X6) articulée avec l'assise (1).

3. Dispositif suivant la revendication 1 ou 2, caractérisé en ce que le moyen de liaison en translation (20) comprend une fourchette (21) à deux dents (22, 23, 105, 106) orientées vers le bas, l'intervalle entre les dents étant déterminé de façon à permettre un engagement localisé du moyen de retenue (3, 26, 61, 84) dans cet intervalle, avec un faible jeu suivant l'axe longitudinal de la glissière (2) dans laquelle est monté coulissant le moyen de retenue (32, 61, 84), lorsque l'assise (1) repose par l'intermédiaire de ses propres glissières (43, 44) sur le plancher (14) du véhicule.

4. Dispositif suivant l'une quelconque des revendications 1 à 3, caractérisé en ce que le moyen de liaison en translation (20) comporte deux fourchettes à deux dents (22, 23; 105, 106) qui laissent entre elles un intervalle permettant la venue en prise d'au moins un moyen d'accrochage (37, 89).

5. Dispositif suivant l'une quelconque des revendications 1 à 4, caractérisé en ce que le moyen de retenue (3) est un barreau transversal (3, 26) dont les deux extrémités (4, 5) sont engagées coulissantes chacune dans un profilé en U (8, 9, 66, 68, 35C) monté sur le côté, ces deux profilés en U étant parallèles à l'axe longitudinal du véhicule et solidaires du plancher (4) de celui-ci, leurs ouvertures étant en regard l'une de l'autre le moyen de liaison en translation (20) étant en prise avec le barreau transversal (3) dans l'intervalle qui sépare les deux profilés en U.

6. Dispositif suivant la revendication 5, caractérisé en ce que les deux profilés en U (35A, 35B) sont solidarisés entre eux et avec le plancher (14) du véhicule par un profilé d'assemblage (35C) la structure ainsi réalisée constituant la glissière (2) dans laquelle coulisse le moyen de retenue (26).

7. Dispositif suivant la revendication 5 ou 6, caractérisé en ce que le côté de chacun des deux profilés en U (8, 35C, 66, 81) qui constitue le bord supérieur de retenue (12, 68, 82) de ce profilé comporte des moyens d'arrêt (16, 35A, 36A, 67, 83) aptes à empêcher l'extrémité correspondante du moyen de retenue (3, 61, 84) de coulisser le long de la glissière (2) lorsqu'elle est soumise à une force de traction exercée par la ou les ceintures de sécurité qui dépasse un seuil situé au-delà des conditions normales d'utilisation du véhicule.

8. Dispositif suivant la revendication 7, caractérisé en ce que les emplacements de chacun de ces moyens d'arrêt (16, 67, 83, 35A, 36A) correspondent à des positions fixes que l'assise (1) est apte à prendre dans son domaine de réglage suivant l'axe longitudinal.

9. Dispositif suivant la revendication 7 ou 8, caractérisé en ce que les moyens d'arrêt (16, 67, 83, 35A, 36A) sont réalisés dans le bord supérieur de retenue (12, 68, 82) de profilés en U métalliques sous forme de logements (16, 67, 83) ou d'encoches (35A, 36A).

10. Dispositif suivant l'une quelconque des revendications 5 à 9, caractérisé en ce que le moyen de retenue (61) est un barreau transversal dont chacune des deux extrémités (61, 62) est solidaire d'un patin (63, 64) en matière plastique allongé parallèlement à l'axe longitudinal.

11. Dispositif suivant la revendication 10, caractérisé en ce que chacun des patins (63, 64) compte des protubérances élastiques (69, 70, 71, 72) qui viennent en appui contre au moins l'une des parois intérieures du profilé en U (66) dans lequel il est engagé.

12. Dispositif suivant l'une quelconque des revendications 2 à 11, caractérisé en ce que le moyen d'accrochage (37, 89) comporte deux crochets identiques de même axe d'articulation (X3, X6) par rapport à l'assise (1) et de même calage angulaire.

13. Dispositif suivant l'une quelconque des revendications 5 à 12, caractérisé en ce que le moyen de retenue (3) est un barreau de révolution (26) qui comporte deux rebords annulaires de guidage (27, 28) disposés à une distance l'un de l'autre telle que la paroi latérale extérieure annulaire et plane (33, 34) de chacun d'entre eux soit en regard des bords d'extrémité du profilé en U (31, 32) dans lequel est engagée l'extrémité correspondante (29, 30) du barreau (26), un faible jeu existant entre cette paroi extérieure annulaire et ces bords l'extrémité.

14. Dispositif suivant l'une quelconque des revendications 5 à 9 et 12, 13, caractérisé en ce que la glissière (2) dans laquelle coulisse le barreau transversal (3) comporte à l'intérieur de chacun des deux profilés en U métalliques (8, 9) qui la constituent un profilé en U en matière plastique (6, 7) dans lequel coulisse l'extrémité correspondante (4, 5) du barreau transversal, profilé en U en matière plastique dont le bord supérieur de retenue (11) ne comporte pas de moyen d'arrêt.

15. Dispositif suivant la revendication 14, caractérisé en ce que chacun des profilés en U en matière plastique (51) comporte des protubérances (54, 55) sur sa paroi intérieure, dirigées vers l'intérieur disposées de part et d'autre de chaque emplacement correspondant à une position fixe de réglage qui peut être choisie pour le moyen de retenue, emplacement correspondant à un moyen d'arrêt (53) que comporte le bord supérieur de retenue du profilé en U métallique (51).

16. Dispositif suivant l'une quelconque des revendications 1 à 15, caractérisé en ce que le moyen de fixation (38, 90) d'au moins une ceinture de sécurité comporte des moyens d'accrochage (37, 89) à deux ceintures de sécurité.

17. Dispositif suivant l'une quelconque des revendications 1 à 16, caractérisé en ce que le moyen d'accrochage (37, 89) comporte deux liaisons articulées, l'une (X4) avec le moyen de fixation (38) l'autre (X3) avec l'assise (1) autour d'axes transversaux (X4, X3) disposés de façon telle qu'une force de traction exercée par la ceinture de sécurité sur le moyen de retenue (3) applique un couple de verrouillage vis-à-vis du moyen de retenue.

18. Dispositif suivant la revendication 17, caractérisé en ce que le moyen de rappel élastique (45) exerce sur le moyen d'accrochage un couple antagoniste de déverrouillage.

19. Dispositif suivant l'une quelconque des revendications 1 à 16, caractérisé en ce que le moyen d'accrochage (37, 89) comporte deux liaisons articulées, l'une avec le moyen de fixation (30) et l'autre avec l'assise (1) autour d'un même axe transversal (X6).

20. Dispositif suivant l'une quelconque des revendications 1 à 19, caractérisé en ce que l'assise (1) du siège équipé d'une ceinture de sécurité reliée au plancher (14) de véhicule au moyen du dispositif suivant l'invention comporte une paire de glissières inférieures (43, 44) articulées à leur extrémités avant autour d'un axe transversal (X5) par rapport à des portées reliées au plancher (14) et rattachées à ce plancher du véhicule en au moins un autre point (47) grâce à un moyen de solidarisation, qu'un moyen de commande actionné derrière l'assise permet de désolidariser du plancher (14) du véhicule.

21. Dispositif suivant la revendication 20, caractérisé en ce que le moyen de commande (102) actionné derrière l'assise permet de désolidariser du moyen de retenue (101) le moyen d'accrochage (37, 89).

22. Dispositif suivant la revendication 20 ou 21, caractérisé en ce que le moyen d'accrochage (37, 89) comporte un bord inférieur (103) dans la zone où il entre en contact avec la paroi du moyen de retenue (101) lors du rabattement de l'assise (1) orienté de façon que la force appliquée par ce moyen (101) sur ce moyen d'accrochage (37, 89) provoque un couple qui entraîne son ouverture.

## Claims

1. Device for connecting to the floor (14) of a motor vehicle fixing means (38,90) for at least one safety belt used to restrain the occupant of a seat in this vehicle, wherein said means (38,90) are located laterally with respect to the occupant of this seat and wherein the base (1) of this seat is capable of assuming one fixed position selected from a plurality of positions along a longitudinal axis relative to the floor (14) of the vehicle, and which comprises
- a slideway (2) fixedly attached to the floor (14) of the vehicle, substantially parallel to the longitudinal axis of the latter and provided with retaining edges (12,68,82),
- retaining means (3,26,61,84) slidably mounted in the slideway (2) and adapted to cooperate with the retaining edges (12,68,82) of said slideway (2);
- translational connecting means (20) which are fixed relative to the seat base (1) and which enable the retaining means (3,26,61,84) to be held precisely in their relative longitudinal position relative to the base (1) when the latter is moved in translation, and which is further characterised in that it comprises
- attachment means (37,89) which are connected directly or indirectly to the fixing means (38,90) for the safety belt and which engage with the retaining means (3,26,61,84),
- in that the fixing means (38,90) are fixed relative to the base of the seat,
- in that the base (1) of the seat can tilt forwards,
- and in that the attachment means (37,89) and the connecting means (20), which are both normally connecting to the retaining means (3,25,61,84) are adapted to separate from said retaining means when the base (1) of the seat is tilted.

2. Device according to claim 1, characterised in that the attachment means (37,89) comprise a connection (X3, X6) jointed to the base (1).

3. Device according to claim 1 or 2, characterised in that the translational connecting means (20) comprise a fork (21) having two downwardly oriented prongs (22,23, 105,106), the spacing between the prongs being arranged so as to allow localised engagement of the retaining means (3,26,61,84) in this spacing, with slight play along the longitudinal axis of the slideway (2) in which the retaining means (32,61,84) are slidably mounted, when the base (1) rests, via its own slides (43,44), on the floor (14) of the vehicle.

4. Device according to any one of claims 1 to 3, characterised in that the translational connecting means (20) comprise two forks having two prongs (22,23;105, 106) which define between them a spacing allowing at least one attachment means (37,89) to engage.

5. Device according to at least one of claims 1 to 4, characterised in that the retaining means (3) is a transverse bar (3,26), the two ends (4,5) of which each engage slidably in a U-shaped section (8,9,66,68,35c) mounted on the side, these two U-shaped sections being parallel to the longitudinal axis of the vehicle and integral with the floor (4) thereof, their openings facing one another, and the translational connecting means (20) engaging with the transverse bar (3) in the spacing which separates the two U-shaped sections.

6. Device according to claim 5, characterised in that the two U-shaped sections (35A,35B) are integrally attached to each other and to the floor (14) of the vehicle by an assembly section (35c), the structure thus produced forming the slideway (2) in which the retaining means (26) slide.

7. Device according to claim 5 or 6, characterised in that the side of each of the two U-shaped sections (8, 35c,66,81) which constitutes the upper retaining edge (12,68,82) of this section has stop means (16,35A,36A, 67,83) adapted to prevent the corresponding edge of the retaining means (3,61,84) from sliding along the slideway (2) when it is subjected to a tensile force exerted by the safety belt or belts which exceeds a threshold beyond the normal conditions of use of the vehicle.

8. Device according to claim 7, characterised in that the locations of each of the stop means (16,67,83,35A, 36A) correspond to fixed positions which the seat base (1) is capable of assuming in its range of adjustment along the longitudinal axis.

9. Device according to claim 7 or 8, characterised in that the stop means (16,67,83,35A,36A) are provided in the upper retaining edge (12,68,82) of the metal U-shaped sections in the form of recesses (16,67,83) or notches (35A,36A).

10. Device according to any one of claims 5 to 9, characterised in that the retaining means (61) consist of a transverse bar, each end (61,62) of which is fixedly connected to a shoe (63,64) of plastics material extending parallel to the longitudinal axis.

11. Device according to claim 10, characterised in that each of the shoes (63,64) has resilient protrusions (69, 70,71,72) which abut on at least one of the inner walls of the U-shaped section (66) in which it engages.

12. Device according to any one of claims 2 to 11, characterised in that the attachment means (37,89) have two identical hooks with the same articulation axis (X3, X6) relative to the base (1) and with the same angular setting.

13. Device according to any one of claims 5 to 12, characterised in that the retaining means (3) consist of a rotating bar (26) which has two annular guide rims (27,28) arranged at a spacing from one another such that the planar, annular outer side wall (33,34) of each of them lies opposite the end edges of the U-shaped section (31,32) in which the corresponding end (29,30) of the bar (26) engages, there being slight play between this annular outer wall and these end edges.

14. Device according to any one of claims 5 to 9 and 12, 13, characterised in that the slideway (2) in which the transverse bar (3) slides comprises, inside each of the two metal U-shaped sections (8,9) which constitute it, a plastics U-shaped section (6,7) in which the corresponding end (4,5) of the transverse bar slides, the upper retaining edge (11) of said plastics U-shaped section having no stop means.

15. Device according to claim 14, characterised in that each of the plastics U-shaped sections (51) has inwardly directed protrusions (54,55) on its inner wall, arranged on each side of each location corresponding to a fixed adjustment position which can be selected for the retaining means, each location corresponding to stop means (53) provided on the upper retaining edge of the U-shaped metal section.

16. Device according to any one of claims 1 to 15, characterised in that the fixing means (38,90) of at least one safety belt comprise means (37,89) for attachment to two safety belts.

17. Device according to any one of claims 1 to 16, characterised in that the attachment means (37,89) comprise two articulated connections, one of them (X4) to the fixing means (38) and the other (X3) to the base (1) about transverse axes (X4,X3) arranged so that a tensile force exerted by the safety belt on the retaining means (3) applies a locking couple with respect to the retaining means.

18. Device according to claim 17, characterised in that the resilient recoil means (45) exert an antagonistic unlocking couple on the attachment means.

19. Device according to any one of claims 1 to 16, characterised in that the attachment means (37,89) comprise two articulated connections, one to the fixing means (30) and the other to the base (1) about the same transverse axis (X6).

20. Device according to any one of claims 1 to 19, characterised in that the base (1) of the seat fitted with a safety belt attached to the floor (14) of the vehicle by means of the device according to the invention comprises a pair of lower slides (43,44) articulated at their front ends about a transverse axis (X5) relative to bearing surfaces connected to the floor (14) and attached to this vehicle floor at at least one other point (47) by fixing means which can be detached from the floor (14) of the vehicle by control means operated behind the seat base.

21. Device according to claim 20, characterised in that the control means (102) operated behind the seat base can be used to disconnect the attachment means (37,89) from the retaining means (101).

22. Device according to claim 20 or 21, characterised in that the attachment means (37,89) comprise a lower edge (103) in the zone where said means come into contact with the wall of the retaining means (101) during the folding down of the seat base (1), oriented so that the force applied by these means (101) to the attachment means (37,89) produces a couple which causes them to open.

## Patentansprüche

1. Vorrichtung zum Verbinden einer Verankerung (38, 90) für mindestens einen Sicherheitsgurt, der zum Festhalten des Benutzers eines Fahrzeugsitzes dient, mit dem Boden (14) eines Fahrzeuges, wobei die Verankerung (38, 90) seitlich vom Benutzer des Sitzes angeordnet ist und eine Grundplatte (1) des Sitzes entlang einer Langsachse eine feste Position relativ zum Boden (14) des Fahrzeuges einnehmen kann, die aus einer Vielzahl von Positionen ausgewählt ist, mit
- einer Gleitschiene (2) die einstückig mit dem Boden (14) des Fahrzeuges ausgebildet ist, sich im wesentlichen parallel zur Längsachse des Fahrzeuges erstreckt und mit Halterändern (12,68,82) versehen ist,
- einer Halteeinrichtung (3, 26, 61, 84), die verschiebbar in der Gleitschiene (2) gelagert ist und mit den Halterändern (12, 68, 82) der Gleitschiene (2) zusammenwirken kann,
- einer Verbindungseinrichtung (20), die relativ zur Grundplatte (1) fest ist und das genaue Einhalten der Position in Längsrichtung relativ zur Halteeinrichtung (3, 26, 61, 84) in bezug auf die Grundplatte (1) ermöglicht, wenn die Grundplatte translatorisch verschoben wird,
dadurch gekennzeichnet, daß
- die Vorrichtung eine Eingriffseinrichtung (37, 89) umfasst, die auf direkte oder indirekte Weise mit der Sicherheitsgurtverankerung (38, 90) verbunden ist und die mit der Halteeinrichtung (3, 26, 61, 84) in Eingriff treten kann,
- die Sicherheitsgurtverankerung (30, 90) relativ zur Grundplatte des Sitzes fest ist,
- die Grundplatte (1) des Sitzes nach vorne kippen kann und
- sowohl die Eingriffseinrichtung (37, 89) als auch die Verbindungseinrichtung (20), die normalerweise mit der Halteeinrichtung (3, 25, 61, 84) verbunden sind , voneinander trennbar sind, wenn man die Grundplatte (1) des Sitzes verkippt.

2. Vorrichtung nach Anspruch 1, dadurch gekennzeichnet, daß die Eingriffseinrichtung (37, 89) eine Gelenkverbindung (X3, X6) mit der Grundplatte (1) aufweist.

3. Vorrichtung nach Anspruch 1 oder 2, dadurch gekennzeichnet, daß die Verbindungseinrichtung (20) eine Gabel (21) mit 2 Zähnen (22, 23, 105, 106) aufweist, die nach unten orientiert sind, wobei der Zwischenraum zwischen den Zähnen so festgelegt ist, daß ein örtlich fixierender Eingriff der Halteeinrichtung (3, 26, 61, 84) in dem Zwischenraum mit einem geringen Spiel entlang der Längsachse der Gleitschiene (2), in der die Halteeinrichtung (32, 61, 84) verschiebbar gelagert ist, erreicht wird, wenn die Grundplatte (1) mit Hilfe ihrer Gleitschienen (43, 44) auf dem Boden (14) des Fahrzeuges ruht.

4. Vorrichtung nach einem der Ansprüche 1-3, dadurch gekennzeichnet, daß die Verbindungseinrichtung (20) zwei Gabein mit zwei Zähnen (22, 23; 105, 106) aufweist, zwischen denen ein Zwischenraum angeordnet ist, der den Eingriff mindestens einer Eingriffseinrichtung (37, 89) ermöglicht.

5. Vorrichtung nach einem der Ansprüche 1-4, dadurch gekennzeichnet, daß die Halteeinrichtung (3) ein Querstab (3, 26) ist, dessen beide Enden jeweils verschiebbar in ein U- Profil (8, 9, 66, 68, 35C) eingreifen, das an der Seite montiert ist, wobei sich die beiden U- Profile parallel zur Längsachse des Fahrzeuges erstrecken und einstückig mit dem Boden (4) desselben ausgebildet sind und ihre Öffnungen der Verbindungseinrichtung (20) gegenüberliegen, die mit dem Querstab (3) in dem die beiden U- Profile trennenden Zwischenraum in Eingriff steht.

6. Vorrichtung nach Anspruch 5, dadurch gekennzeichnet, daß die beiden U- Profile (35A, 35B) durch ein Montageprofil (35C) einstückig miteinander und mit dem Boden (14) des Fahrzeuges ausgebildet sind, wobei die auf diese Weise gebildete Konstruktion die Gleitschiene (2) vorsieht, in der die Halteeinrichtung (26) verschiebbar gelagert ist.

7. Vorrichtung nach Anspruch 5 oder 6, dadurch gekennzeichet, daß diejenige Seite eines jeden U-Profiles (8, 35C, 66, 81), die den oberen Halterand (12, 68, 82) dieses Profiles bildet, Arretierungseinrichtungen (16, 35A, 36A, 67, 83) aufweist, die ein Verschieben des entsprechenden Randes der Halteeinrichtung (3, 61, 84) entlang der Gleitschiene (2) verhindern können, wenn diese einer Zugkraft ausgesetzt ist, die von dem Sicherheitsgurt oder den Sicherheitsgurten ausgeübt wird und einen Schwellenwert oberhalb der normalen Betriebsbedingungen des Fahrzeuges übersteigt.

8. Vorrichtung nach Anspruch 7, dadurch gekennzeichnet, daß die Positionen einer jeden Arretierungseinrichtung (16, 67, 83, 35A, 36A) festen Positionen entsprechen, die die Grundplatte (1) in ihrem Regelbereich entlang der Längsachse einnehmen kann.

9. Vorrichtung nach Anspruch 7 oder 8, dadurch gekennzeichnet, daß die Arretierungseinrichtungen (16, 67, 83, 35A, 36A) am oberen Halterand (12, 68, 82) der metallischen U- Profile in der Form von Sitzmulden (16, 67, 83) oder Aussparungen (35A, 36A) verwirklicht sind.

10. Vorrichtung nach einem der Ansprüche 5-9, dadurch gekennzeichnet, daß die Halteeinrichtung (61) ein Querstab ist, von dem jedes seiner beiden Enden (61, 62) einstückig mit einer Kufe (63, 64) aus Kunststoff ausgebildet ist, die sich parallel zur Längsachse erstreckt.

11. Vorrichtung nach Anspruch 10, dadurch gekennzeichnet, daß jede der Kufen (63, 64) elastische Vorsprünge (69, 70, 71, 72) besitzt, die sich gegen mindestens eine Innenwand des U- Profiles (66) abstützen, mit dem diese in Eingriff steht.

12. Vorrichtung nach einem der Ansprüche 2-11, dadurch gekennzeichnet, daß die Eingriffseinrichtung (37, 89) zwei identische Haken mit gleicher Schwenkachse (X3, X6) in bezug auf die Grundplatte (1) und mit gleichem Positionierungswinkel umfasst.

13. Vorrichtung nach einem der Ansprüche 5-12, dadurch gekennzeichnet, daß die Halteeinrichtung (3) ein Drehstab (26) ist, der zwei ringförmige Führungssimse (27, 28) aufweist, die in einem solchen Abstand voneinander angeordnet sind, daß die seitliche ringförmige und ebene Außenwand (33, 34) eines jeden Simses den Außenrändern des U- Profiles (31, 32) gegenüberliegt, mit dem das entsprechende Ende (29, 30) des Stabes (26) in Eingriff steht, wobei zwischen dieser ringförmigen Außenwand und den Außenrändern ein geringfügiges Spiel vorhanden ist.

14. Vorrichtung nach einem der Ansprüche 5-9 und 12, 13, dadurch gekennzeichnet, daß die Gleitschiene (2), in der der Querstab (3) verschiebbar gelagert ist, im Innern eines jeden der sie bildenden zwei metallischen U- Profile (8, 9) ein U- Profil (6, 7) aus Kunststoff aufweist, in dem das entsprechende Ende (4, 5) des Querstabes verschiebbar gelagert ist, wobei der obere Halterand (11) des U- Profiles aus Kunststoff keine Arretierungseinrichtung aufweist.

15. Vorrichtung nach Anspruch 14, dadurch gekennzeichnet, daß jedes der U- Profile (51) aus Kunststoff an Seiner Innenwand Vorsprünge (54, 55) aufweist, die beiderseits einer jeden Position nach innen gerichtet sind, welche einer festen Regelposition entspricht, die durch die Halteeinrichtung gewählt werden kann, wobei diese Position einer Arretierungseinrichtung (53) entspricht, die der obere Halterand des metallischen U- Profiles (51) trägt.

16. Vorrichtung nach einem der Ansprüche 1-15, dadurch gekennzeichnet, daß die Verankerung (38, 90) für den mindestens einen Sicherheitsgurt Eingriffseinrichtungen (37, 89) für zwei Sicherheitsgurte umfasst.

17. Vorrichtung nach einem der Ansprüche 1-16, dadurch gekennzeichnet, daß die Eingriffseinrichtung (37, 89) zwei Gelenkverbindungen (X4, X3) mit der Verankerung (38) einerseits und der Grundplatte (1) andererseits um Querachsen ( X4, X3) aufweist, die so angeordnet sind, daß eine über den Sicherheitsgurt auf die Halteeinrichtung (3) ausgeübte Zugkraft gegenüber der Halteeinrichtung ein Blockierungsmoment aufbringt.

18. Vorrichtung nach Anspruch 17, dadurch gekennzeichnet, daß die elastische Rückstelleinrichtung (45) ein gegenwirkendes Moment zum Lösen auf die Eingriffseinrichtung aufbringt.

19. Vorrichtung nach einem der Ansprüche 1-16, dadurch gekennzeichnet, daß die Eingriffseinrichtung (37, 89) zwei Gelenkverbindungen mit der Verankerung (30) einerseits und der Grundplatte (1) andererseits um eine Querachse (X6) aufweist.

20. Vorrichtung nach einem der Ansprüche 1-19, dadurch gekennzeichnet, daß die Grundplatte (1) des Sitzes, der mit einem Sicherheitsgurt versehen ist, welcher mit Hilfe der erfindungsgemäß ausgebildeten Vorrichtung mit dem Boden (14) des Fahrzeuges verbunden ist, ein Paar von unteren Gleitschienen (43, 44) aufweist, die an ihren vorderen Enden relativ zu Verbindungsbereichen mit dem Boden (14) um eine Querachse (X5) verschwenkbar sind und die über eine Verbindungseinrichtung an mindestens einem anderen Punkt (47) mit dem Boden des Fahrzeuges verbunden sind, wobei eine hinter der Grundplatte wirkende Steuereinrichtung eine Trennung der Verbindungseinrichtung vom Boden (14) des Fahrzeuges ermöglicht.

21. Vorrichtung nach Anspruch 20, dadurch gekennzeichnet, daß die hinter der Grundplatte wirkende Steuereinheit (102) ein Lösen der Eingriffseinrichtung (37, 89) von der Halteeinrichtung (101) ermöglicht.

22. Vorrichtung nach Anspruch 20 oder 21, dadurch gekennzeichnet, daß die Eingriffseinrichtung (37, 89) in dem Bereich, in dem sie mit der Wand der Halteeinrichtung (101) während des Umklappe der Grundplatte (1) in Kontakt tritt, einen unteren Rand (103) aufweist, der derart orientiert ist, daß die über die Einrichtung (101) auf die Eingriffseinrichtung (37, 89) aufgebrachte Kraft ein Moment erzeugt, das deren Öffnen bewirkt.
